Europäisches Patentamt

European Patent Office

Office européen des brevets

(11) Publication number: **0 350 231**
**A2**

# EUROPEAN PATENT APPLICATION

(21) Application number: **89306715.7**

(22) Date of filing: **03.07.89**

(51) Int. Cl.⁴: **G01G 19/44**

(30) Priority: **08.07.88 GB 8816293**

(43) Date of publication of application:
**10.01.90 Bulletin 90/02**

(84) Designated Contracting States:
**AT BE CH DE ES FR GB GR IT LI LU NL SE**

(71) Applicant: **J. & S. FRANKLIN LIMITED**
**Franklin House 151 Strand**
**London WC2R 1HL(GB)**

(72) Inventor: **Franklin, Sydney Mark Frederick**
**14 Ovington Gardens**
**London SW3(GB)**

(74) Representative: **Leale, Robin George et al**
**FRANK B. DEHN & CO. Imperial House 15-19**
**Kingsway**
**London WC2B 6UZ(GB)**

(54) **Portable weighing apparatus.**

(57) A portable weighing apparatus, e.g. for a person, comprises an inflatable and collapsible air container (1) adapted, when inflated, to bear the weight of an article to be weighed. An air pressure operated weight gauge (12) is connected to the container so as to be operated by the pressure of air in the container and thereby to indicate the weight of an article placed on the container. A pressure regulating valve (21) may be provided for setting the gauge.

FIG.1.

## Portable Weighing Apparatus

This invention relates to a portable weighing apparatus, and in particular to weighing apparatus suitable for weighing a person.

Conventional known weighing apparatus for measuring the weight of a user is generally made at least partly of metal and consequently is quite heavy. Furthermore, known weighing apparatus tends to be rather bulky. These two factors mean that such conventional apparatus is not readily portable, and there is a need for a more readily portable weighing apparatus which a person may use may check his weight while on holiday or on a business trip, for example.

According to the present invention there is provided a portable weighing apparatus comprising an inflatable and collapsible air container adapted, when inflated, to bear the weight of an article to be weighed, and an air pressure operated weight gauge connectible to the said container in such manner as to be operated by the pressure of air in the inflated container and thereby to indicate the weight of an article placed on the container.

At least in its preferred forms, such a weighing apparatus according to the invention may be light in weight and may be collapsed and folded up to occupy only a small space. Thus the apparatus may be readily portable.

In a preferred embodiment a pressure regulating valve may be provided between the air container and the gauge, to allow the gauge to be set to zero when the air container is inflated and before a weight is placed upon it. After use, the pressure regulating valve may be used to deflate the container.

Preferably the air container is formed of a lightweight flexible material such as rubber or plastics so that the container may be easily inflated, then deflated and folded up into a small space. The gauge and, if provided, the regulating valve may be made small and lightweight.

The air container may comprise a single element, but in a preferred form it comprises an inner bag receivable within an outer case. The outer case may be made more self-supporting than the inner bag, by reinforcing means, for example reinforcing piped edges, to provide a degree of rigidity to the inflated container. When the apparatus is deflated and collapsed, other components of the apparatus may be housed in the said outer case.

To help to prevent a user from slipping while standing on the air container, a non-slip pad or a pair of non-slip foot pads may be provided on the upper surface of the container. When an outer case is provided, such a pad or pads would of course be provided on the outer case.

The air container may be inflated in various ways, for example directly by a user blowing into the container. It is preferred however to provide the apparatus with a pump, for example a bellows type pump which may be foot-operated.

An embodiment of the invention will now be described by way of example and with reference to the accompanying drawings, in which:-

Fig. 1 is a perspective view of an assembled weighing apparatus according to the invention; and

Fig. 2 shows the apparatus of Fig. 1 in a disassembled state.

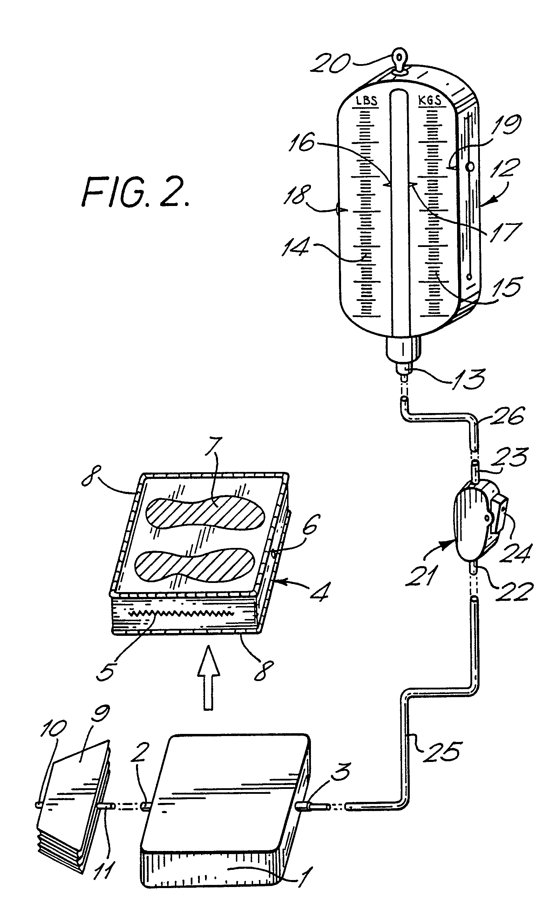

Referring firstly to Fig. 2, the weighing apparatus comprises an inner air bag 1 which is made of flexible and elastic material such as rubber and is provided with an inlet tube 2 and an outlet tube 3 so that air may be charged thereinto to form an air cushion which is flat on its top surface. An outer case 4 has a shape substantially the same as, while being slightly larger than, the inner air bag 1 when the latter is fully charged with air. The outer case 4 is formed with a slit 5 on one side through which the inner bag 1 may be inserted in the outer case, and has a pair of openings 6 at positions corresponding to the locations of the inlet and the outlet tubes 2 and 3 of the inner air bag 1, so as to allow the inlet and outlet tubes to protrude outwardly therefrom. A pair of non-slip plastic foot pads 7 are attached to the top surface of the outer case 2 to help to prevent slipping when a user stands thereon, and piped edges 8 are provided for reinforcing the outer case 2 and keeping the top surface thereof flat in use.

A bellows type air pump 9 has an air inlet port 10, and an outlet port 11 connectible to the inlet tube 2 of inner air bag 1, each port 10 and 11 being provided with a one-way valve therein so that air may be charged through the air pump 9 into the inner air bag 1.

An air pressure type weight gauge 12 has an air inlet tube 13, and weight scales 14 and 15, respectively expressed in pounds and kilograms, on the front surface thereof. Two weight indicators 16 and 17 move along the weight scales 14 and 15 according to the fluctuation of the air pressure within the inner air bag 1. Weight setting pointers 18 and 19 can be positioned to an ideal weight value for reference, and a suspension hook 20 is provided for hanging the weight gauge 12 from a hook on a door for example. A pressure regulating valve 21 is provided between the weight gauge 12 and the inner air bag 1, having an air inlet port 22, an outlet port 23, and an air pressure release knob 24 to regulate the air pressure within the system as may be necessary. Connection hoses 25 and 26 respectively connect the outlet tube 3 of the inner air bag 1 with the inlet port 22 of the pressure regulating valve 24, and the outlet port 23 of the valve with the inlet tube 13 of the weight gauge 12.

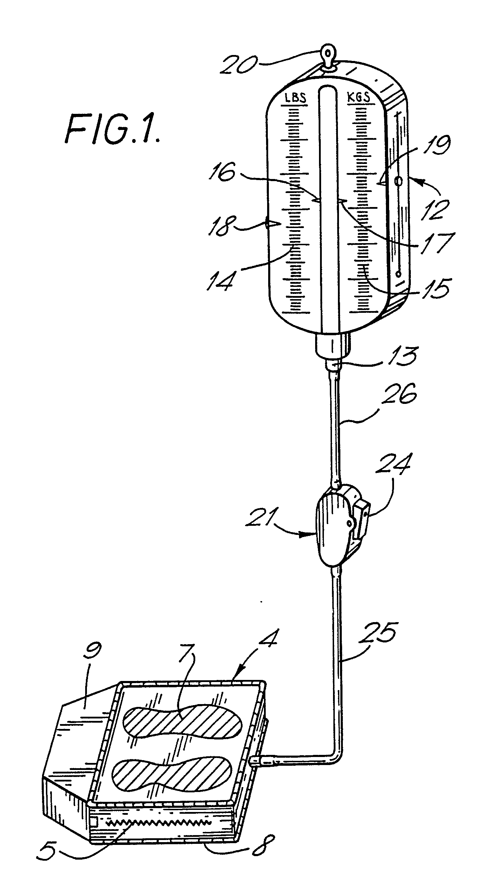

Fig. 1 shows the assembled state of the weighing apparatus. The apparatus is assembled by inserting the deflated inner air bag 1 through the slit 5 into the outer case 4; connecting the inlet tube 2 of the bag 1 with the outlet port 11 of the air pump 9; connecting the outlet tube 3 of the bag 1 with the inlet port 22 of the pressure regulating valve 21 by means of the hose 25; and connecting the outlet port 23 of the valve 5 with the inlet tube 13 of the weight gauge 12 by means of the hose 26.

Prior to use, the inner air bag 1 is inflated by means of the air pump 3, while the pressure regulating valve 21 is operated so as to set the weight indicator 12 to a zero reading. Then, when a user stands on the outer case 4, the air pressure within the inner air bag 1 will increase and moves the weight indicators 16,17 to a position depending on the weight of the user.

After use, the pressure regulating valve 21 may be operated to release the air from the inner air bag 1, the hoses 25 and 26, and the weight gauge 12, so that the space occupied by the weighing apparatus may be greatly reduced and the whole apparatus can be stored away.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any such claims if and when amended during the prosecution of this application or in the filing of prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

## Claims

1. A portable weighing apparatus comprising an inflatable and collapsible air container adapted, when inflated, to bear the weight of an article to be weighed, and an air pressure operated weight gauge connectible to the said container in such manner as to be operated by the pressure of air in the inflated container and thereby to indicate the weight of an article placed on the container.

2. Apparatus according to claim 1, further comprising a pressure regulating valve between said air container and said gauge.

3. Apparatus according to claim 1 or 2, wherein said air container comprises an inner bag, and an outer casing for receiving said inner bag.

4. Apparatus according to claim 3, wherein said outer casing is made more self-supporting than said inner bag, by reinforcing means.

5. Apparatus according to claim 4, wherein said reinforcing means comprises piped edges of the outer casing.

6. Apparatus according to any preceding claim, wherein an upper surface of said air container is provided with a non-slip pad.

7. Apparatus according to any preceding claim, including a pump for inflating the air container.

8. Apparatus according to claim 7, wherein said pump is a foot-operable bellows type pump.

FIG.1.

FIG. 2.